# FASCICULE DE BREVET EUROPEEN

(11) **EP 2 152 500 B1**
(45) Date de publication et mention de la délivrance du brevet: **23.02.2011**
(21) Numéro de dépôt: 08787928.4
(22) Date de dépôt: 09.04.2008
(51) Int. Cl.: B29C 70/38

(54) **TÊTE DE DRAPAGE DE COMPOSITE AVEC DISPOSITIF ESCAMOTABLE DE SÉPARATION DE PRÉIMPRÉGNÉ DE SON RUBAN DE SUPPORT**
VERBUNDAUFLAGEKOPF MIT AUSZIEHBARER VORRICHTUNG ZUR TRENNUNG EINES PREPREGS VON SEINEM TRÄGERBAND
COMPOSITE LAY-UP HEAD WITH A RETRACTABLE DEVICE FOR SEPARATING A PREPREG FROM ITS SUPPORT TAPE

(30) Priorité: 04.05.2007 FR 0703222
(43) Date de publication de la demande: 17.02.2010
(73) Titulaire: Forest-Line Capdenac, 75017 Paris (FR)
(72) Inventeur: TILLEMENT, Pierre, André, Henri, F-12300 Decazeville (FR); CHARRA, Stéphane, Robert, Elie, F-46100 Figeac (FR)
(74) Mandataire: Bertrand, Didier
(86) Numéro de dépôt international: PCT/FR2008/000493
(87) Numéro de publication internationale: WO 2008/142273

(56) Documents cités:
- EP-A- 0 144 927
- FR-A- 2 888 156
- US-A- 4 842 684
- US-A- 5 314 563

## Description

L'invention concerne une tête de drapage équipée d'un dispositif de séparation de préimprégné de son ruban de support.

Il est connu de déposer automatiquement sur un moule ou outillage de dépose, grâce à un robot muni d'une tête de drapage, un ruban ou une nappe de fibres pour la fabrication de pièces diverses telles que des ailes d'avion, à partir d'un ruban composite constitué d'éléments de fibres (carbone, verre, Kevlar®, etc.) encollées, par imprégnation d'une résine thermodurcissable ou thermo-plastique, et supportées sur un ruban de support en papier ou en film plastique. Le préimprégné est amené à passer sous un organe de dépose de la tête de drapage et est déposé sur le moule ou l'outillage grâce audit organe de dépose, qui peut être par exemple un rouleau, éventuellement segmenté.

Le document US 5 314 563 enseigne de tels procédés de dépose de composite au moyen d'une tête de drapage, dans lesquels le préimprégné est amené jusqu'à l'organe de dépose de la tête de drapage sur son ruban de support, est déposé grâce à un organe de dépose, le ruban de support passant lui-même sous l'organe de dépose et étant ensuite rembobiné en aval de l'organe de dépose.

De tels procédés présentant des inconvénients, la Demanderesse a mis au point et décrit dans le document US 4 842 684, un procédé dans lequel le ruban composite est dévidé d'une bobine pour passer sur la tête de drapage où le ruban de fibres préimprégnées est séparé du ruban de support, ce dernier étant renvoyé sur un mandrin d'enroulement, tandis que le préimprégné est appliqué sur le moule ou les couches précédentes déjà déposées, par un organe de dépose et de compactage constitué généralement d'un rouleau ou d'un sabot applicateur lié à la tête de drapage. Contrairement aux procédés antérieurs, le ruban de support est séparé du préimprégné juste en amont de l'organe de dépose.

Compte tenu des formes des pièces réalisées, et notamment de leurs bords, il convient non seulement de déposer des tronçons de ruban « *pleine largeur »,* à quatre cotés, mais également des tronçons de formes diverses, obtenus par découpe complexe du ruban.

Pour les découpes traversantes de formes simples, on utilise un processus de dépose monophase qui comprend la découpe *in situ* des bandes à déposer et leur dépose immédiate par la même machine. Un couteau mécanique ou à ultrasons coupe le ruban préimprégné directement sur son papier support sans couper ce dernier qui sera réenroulé sur le mandrin après pelage juste en amont de l'organe de dépose.

Pour les bandes à découper de forme complexe, la Demanderesse a mis au point un procédé biphase, selon lequel la découpe se fait en amont du procédé de dépose proprement dit, avec une première machine spécialisée dans laquelle les tronçons successifs prédécoupés sont disposés sur le ruban de support initial ou reconditionné entre deux protecteurs et enroulés sur une cassette installée ensuite sur la tête de drapage.

Pour assurer au mieux le guidage du préimprégné, la séparation du préimprégné et de son support doit se faire le plus près possible du rouleau de dépose de la tête de drapage, disposé transversalement au ruban.

Toutefois, cette exigence est difficile à réaliser lorsque les découpes successives du préimprégné sont disposées sur le ruban support d'une manière qui conduit à voir côte à côte dans une même ligne transversale du ruban des parties de deux tronçons successifs : c'est le cas notamment lors d'une découpe oblique, par exemple à 45°, entre deux tronçons, où la queue du premier tronçon côtoie la tête du second tronçon. Afin d'éviter que la tête du second tronçon passe sous le rouleau de dépose alors que le premier tronçon n'est pas encore totalement déposé, on est alors obligé de maintenir la distance entre ledit rouleau et le séparateur à une distance supérieure à la longueur de chevauchement des deux tronçons successifs, c'est-à-dire supérieure à la largeur du ruban dans le cas d'une découpe à 45° où la longueur de chevauchement égale la largeur du ruban. Cette distance nécessaire est donc plus grande que ce qui serait souhaitable dans les cas où elle n'est pas rendue indispensable à cause de la découpe oblique, et notamment dans le cas normal d'une simple découpe transversale. Il en résulte un risque de mauvais guidage du ruban de préimprégné.

Pour remédier à ce problème, la Demanderesse a décrit, dans le document FR 2 888 156, une tête de drapage d'un ruban préimprégné dans laquelle un ruban préimprégné accolé à un ruban de support est séparé de son ruban porteur par pelage au moyen d'un séparateur juste en amont d'un organe de dépose du ruban préimprégné sur un outillage de dépose, et où la distance entre le séparateur et l'organe de dépose est ajustable grâce, par exemple, à un chariot mobile. Cette distance est ajustable en cours de dépose entre une valeur minimale où le séparateur et l'organe de dépose sont très voisins l'un de l'autre et une valeur maximale où ils sont séparés par une distance égale au moins à la largeur du ruban (pour une coupe à 45°), de façon à permettre la séparation du support dans le cas de tronçons successifs séparés par une découpe oblique.

Ce dispositif donne parfaitement satisfaction, mais exige un certain encombrement pour obtenir la rigidité compatible avec les exigences de précision de dépose.

Le but de l'invention est donc de proposer une solution alternative au problème de la séparation du préimprégné.

L'invention atteint son but grâce à une tête de drapage d'un préimprégné dans laquelle un préimprégné accolé à un ruban de support est séparé de son ruban de support par pelage au moyen d'un séparateur juste en amont d'un organe de dépose du préimprégné sur un outillage de dépose, caractérisée en ce qu'elle comprend entre le séparateur et l'organe de dépose des moyens escamotables d'écartement du préimprégné par rapport au ruban de support permettant l'écartement du préimprégné de son support juste en amont du séparateur, moyennant quoi la séparation du préimprégné peut être faite plus tôt quand ces moyens sont activés.

En pratique, tant que les bandes de préimprégné se terminent de façon droite, les moyens d'écartement auxiliaires restent escamotés et le séparateur effectue seul et normalement la séparation du préimprégné de son support par pelage. Lorsque les bandes de préimprégné se terminent de façon inclinée (par rapport à la trajectoire du produit), les moyens d'écartement auxiliaires sont activés et viennent, en complément du séparateur, anticiper le pelage en s'insérant entre le préimprégné et son support jusqu'à ce que la fin de bande en cours de dépose soit détachée de son support. Les moyens d'écartement auxiliaires reviennent ensuite à leur position escamotée.

Avantageusement, les moyens escamotables d'écartement comportent au moins un organe d'écartement susceptible de se déplacer entre une première position, escamotée, où il est hors de la trajectoire du préimprégné et une seconde position, active, où il dévie la trajectoire du préimprégné au voisinage du séparateur, de manière à réaliser l'écartement du préimprégné et son pré-décollage du ruban de support.

Avantageusement, l'organe d'écartement dans sa seconde position, active, contourne le séparateur pour remonter vers l'amont de préimprégné, de manière à réaliser plus sûrement ce décollage anticipé.

Avantageusement, les moyens escamotables d'écartement comportent un support de l'organe monté sur des moyens pivotants et des moyens coulissants par rapport à la tête de drapage.

Avantageusement, les moyens escamotables d'écartement peuvent être commandés au moyen d'une came et d'un galet suiveur permettant de réaliser les deux mouvements à partir d'un mouvement de translation. Ces deux mouvements peuvent être aussi réalisés séquentiellement grâce à deux actionneurs indépendants, l'un commandant le basculement et l'autre la translation. Ces actionneurs pouvant être pneumatiques, électriques, hydrauliques, etc.

En pratique, un chariot supporte deux bielles sur lesquelles les moyens auxiliaires d'écartement sont fixés. Le chariot possède une liaison glissière qui lui permet de se mouvoir parallèlement au défilement du produit grâce à un système d'entraînement. La liaison qui lie les bielles au chariot est une liaison pivot.

Avantageusement, l'organe d'écartement est un fil ou un rouleau d'écartement, ou de préférence deux petits rouleaux d'écartement, ou tout autre élément pouvant facilement être inséré entre le support et le préimprégné.

Les avantages de la solution de l'invention sont les suivants.

L'arête de pelage constituant le séparateur étant fixe, elle peut être placée près de l'organe de dépose et ainsi améliorer le guidage des bandes de préimprégné.

La rigidité nécessaire pour les moyens auxiliaire d'écartement est secondaire étant donné que le guidage est réalisé par le séparateur fixe. L'encombrement de l'ensemble est donc moins important que dans la solution précédemment connue.

L'effort de pelage nécessaire est celui de décollement du préimprégné par rapport au support de papier, il n'est donc plus nécessaire de vaincre l'effort de tension du produit et du papier.

Enfin les moyens auxiliaires d'écartement décollent la fin de la bande qui est en cours de dépose sans décoller la pointe de la découpe suivante.

La tête de drapage de l'invention permettant d'effectuer plus facilement les décollages complexes, il est possible et avantageux d'utiliser un ruban de support qui supporte d'une part des découpes complémentaires de préimprégné séparées par de simples lignes de découpe traversante et d'autre part des découpes complexes de préimprégné séparées par des chutes qui ont été enlevées. Les premières découpes sont les découpes traditionnelles utilisées dans le procédé monophase évoqué plus haut et les secondes découpes sont les découpes utilisées traditionnellement dans le procédé biphase et qui exigeaient un reconditionnement préalable. Comme il faut souvent utiliser l'un et l'autre procédés sur une même pièce complexe aéronautique, il est courant d'utiliser une tête double afin d'éviter à avoir à changer trop souvent de bobines pour passer d'un procédé à l'autre. Néanmoins, une tête double pose des problèmes de poids embarqué sur la tête, d'autant plus difficiles à résoudre qu'on veut dans le même temps rendre les têtes encore plus mobiles selon encore plus d'axes ou de directions. Grâce à l'invention, on peut regrouper sur une même tête les procédés, soit qu'on procède à la coupe de toutes les découpes par des couteaux appropriés (par exemple ultrasoniques) sur la tête de drapage elle-même, soit qu'on procède à une découpe spécialisée en amont du drapage et à un reconditionnement général sur cassette.

D'autres caractéristiques et avantages de l'invention apparaîtront à la lecture de la description suivante, en référence aux dessins annexés sur lesquels :
- la figure 1 est une vue schématique latérale de l'extrémité de la tête de drapage dans la position escamotée des rouleaux de séparation de préimprégné conformes à la présente invention ;
- la figure 2 est une vue schématique latérale de l'extrémité de la tête de drapage dans la position active des rouleaux de séparation de préimprégné conformes à la présente invention ;
- la figure 3 est une vue d'un ruban de support portant différentes sortes de découpes d'imprégné, avantageusement utilisable dans la tête de drapage conforme à l'invention.

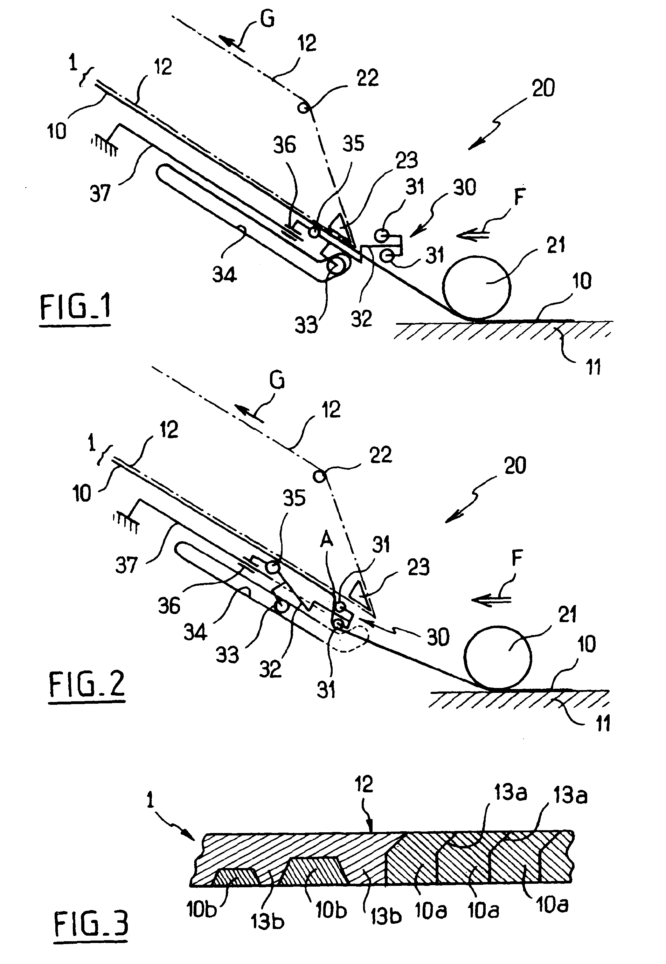

Les figures 1 et 2 sont représentées de manière schématique et fonctionnelle, de manière à simplifier la compréhension de l'invention. On pourra se reporter pour des explications plus complètes sur une tête de drapage aux brevets cités en tête de ce document.

La tête de drapage 20 selon l'invention comporte essentiellement un rouleau de dépose 21 et un séparateur sous forme d'une arête de pelage 23. Ces deux éléments sont fixes l'un par rapport à l'autre et embarqués sur la tête de drapage 20, laquelle est mobile dans un certain nombre de directions, généralement au moins 5.

Le complexe 1 est fourni en provenance d'une cassette embarquée sur la tête 20 et non représentée. Il se présente sous forme de ruban complexe 1 comportant d'une part un ruban continu de papier support 12 (dont le trajet est représenté en traits mixtes sur les figures 1 et 2) et d'autre part des pièces de matériau composite ou préimprégné 10 qui adhèrent au papier 12 et ne sont pas continues mais au contraire (cf. figure 3) forment des découpes successives 10a, 10b plus ou moins longues séparées par des espaces libres 13b correspondant à des chutes qui ont été enlevées ou de simples lignes de découpe traversante 13a (le trajet des pièces 10 est néanmoins représenté en trait plein). Les découpes de préimprégné 10 suivent une trajectoire rectiligne jusqu'à un rouleau de dépose 21 pour être déposées par celui-ci sur un outillage de dépose 11, tel qu'un moule, au-dessus duquel le rouleau de dépose 21 appuie en se déplaçant dans le sens de la flèche F. Pour ce faire, le préimprégné a été séparé de son papier de support 12 juste avant la dépose par l'arête de pelage 23, disposée le plus près possible du rouleau de dépose. L'arête de pelage 23 renvoie le papier 12 vers un rouleau 22 et de là, vers un mandrin d'enroulement non représenté, embarqué sur la tête de drapage 20 et exerçant une tension constante dans le sens de la flèche G.

Selon l'invention, la tête de drapage 20 comporte des moyens escamotables 30 d'écartement du préimprégné 10 par rapport à son papier de support 12. Ces moyens écarteurs auxiliaires 30 comportent deux petits rouleaux 31 montés libres à l'extrémité d'un support 32 capable d'un mouvement qui fait passer les rouleaux 31 d'une première position, escamotée, figure 1, où ils sont disposés au-dessus du trajet du préimprégné, juste en aval de l'arête de pelage 23 à une seconde position, active, figure 2, où les rouleaux 31 sont venus contourner l'arête de pelage par devant et au-dessous, de manière à appuyer et enfoncer le préimprégné 10 et l'écarter de sa trajectoire rectiligne antérieure. Quand les rouleaux 31 viennent se glisser sous l'arête de pelage 23, ils forcent le préimprégné 10 à se décoller de façon anticipée du papier support 12 au niveau d'une zone A située en amont de l'arête de pelage 23. Le préimprégné 10 regagne ensuite, après être passé sur les rouleaux 31, le rouleau de dépose 21.

Le support 32 des rouleaux 31, pour lui permettre ce mouvement de contournement de l'arête de pelage 23, comporte des moyens de montage coulissants et des moyens de montage pivotant. Le support 32 est monté pivotant sur une liaison pivotante 35, qui est elle-même mobile en translation grâce à une liaison coulissante d'une glissière 36 et d'un rail 37 embarqué sur la tête de drapage. Le support 32 comporte un galet 33 suivant une came 34 dont le profil en L couché commande, sur la petite branche du L, l'abaissement des rouleaux 31 au-dessous de la trajectoire normale du préimprégné, et sur la grande branche du L, la translation vers l'amont de l'arête de pelage 23, pour faire « remonter » la séparation du préimprégné 10 et de son papier de support 12.

Sur les figures, on a représenté le trajet du préimprégné 10 et de son support 12 sous forme rectiligne en amont du rouleau de dépose. L'invention s'applique également au cas où le trajet est curviligne (par exemple sensiblement en arc de cercle convexe) ; cette disposition libère plus de place au voisinage de la tête et renforce la tenue du ruban qui est conduit le long de ce trajet. Dans cette disposition, les moyens d'escamotage doivent s'adapter à cette courbure et peuvent comprendre, par exemple, un dispositif à courroie.

## Revendications

1. Tête de drapage (20) d'un ruban préimprégné dans laquelle un préimprégné (10) accolé à un ruban de support (12) est séparé de son ruban de support par pelage au moyen d'un séparateur (23) juste en amont d'un organe (21) de dépose du ruban préimprégné (10) sur un outillage de dépose (11), **caractérisée en ce qu'**elle comprend en aval du séparateur des moyens escamotables (30) d'écartement du préimprégné (10) par rapport au ruban de support (12) permettant l'écartement du préimprégné juste en amont du séparateur (23), moyennant quoi la séparation du préimprégné peut être faite plus tôt quand ces moyens sont activés.

2. Tête de drapage (20) selon la revendication 1, **caractérisée en ce que** les moyens escamotables d'écartement comportent au moins un organe d'écartement (31) susceptible de se déplacer entre une première position, escamotée, où il est hors de la trajectoire du préimprégné et une seconde position, active, où il dévie la trajectoire du préimprégné au voisinage du séparateur.

3. Tête de drapage (20) selon la revendication 2, **caractérisée en ce que** l'organe d'écartement (31) dans sa seconde position, active, contourne le séparateur pour remonter vers l'amont de préimprégné (10).

4. Tête de drapage (20) selon la revendication 3, **caractérisée en ce que** les moyens escamotables d'écartement comportent un support (32) de l'organe (31) monté sur des moyens pivotants (35) et des moyens coulissants (36) par rapport à la tête de drapage.

5. Tête de drapage (20) selon la revendication 4, **caractérisée en ce que** les moyens escamotables d'écartement sont commandés en mouvement au moyen d'une came (34) et d'un galet suiveur (33).

6. Tête de drapage (20) selon l'une quelconque des revendications 2 à 5, **caractérisée en ce que** l'organe d'écartement est un rouleau d'écartement (31).

7. Tête de drapage (20) selon l'une quelconque des revendications 2 à 5, **caractérisée en ce que** l'organe d'écartement est un fil.

8. Tête de drapage (20) selon l'une quelconque des revendications 1 à 7, **caractérisée en ce que** le séparateur est une arête de pelage (23).

9. Tête de drapage (20) selon l'une quelconque des revendications 1 à 8, **caractérisée en ce que** le ruban de support (12) supporte d'une part des découpes de préimprégné (10a) séparées par de simples lignes de découpe (13a) et d'autre part des découpes de préimprégné (10b) séparées par des espaces correspondant à des chutes (13b).

## Claims

1. Lay-up head (20) for a pre-impregnated tape, wherein a prepreg (10) bonded to a support tape (12) is separated from its support tape by peeling using a separator (23) just upstream of a member (21) for depositing the pre-impregnated tape (10) on a placement tool (11), **characterised in that** it comprises, downstream of the separator, retractable means (30) for detaching the prepreg (10) from the support tape (12) enabling the prepreg to be detached just upstream of the separator (23), by means of which the prepreg can be separated earlier when these means are activated.

2. Lay-up head (20) as claimed in Claim 1, **characterised in that** the retractable detachment means comprise at least one detachment member (31) able to be moved between a first retracted position where it is outside the path of the prepreg and a second active position where it diverts the path of the prepreg in the proximity of the separator.

3. Lay-up head (20) as claimed in Claim 2, **characterised in that** the detachment member (31) in the second active position moves around the separator to rise in the upstream direction of prepreg (10).

4. Lay-up head (20) as claimed in Claim 3, **characterised in that** the retractable detachment means comprise a support (32) for the member (31) mounted on pivoting means (35) and means (36) sliding with respect to the lay-up head.

5. Lay-up head (20) as claimed in Claim 4, **characterised in that** the movement of the retractable detachment means is controlled using a cam (34) and a cam follower (33).

6. Lay-up head (20) as claimed in any one of Claims 2 to 5, **characterised in that** the detachment member is a detachment roller (31).

7. Lay-up head (20) as claimed in any one of Claims 2 to 5, **characterised in that** the detachment member is a wire.

8. Lay-up head (20) as claimed in any one of Claims 1 to 7, **characterised in that** the separator is a peeling edge (23).

9. Lay-up head (20) as claimed in any one of Claims 1 to 8, **characterised in that** the support tape (12) supports on the one hand prepreg cut-outs (10a) separated by simple cut lines (13a) and on the other hand prepreg cut-outs (10b) separated by spaces corresponding to off-cuts (13b).

## Patentansprüche

1. Auflagekopf (20) eines Prepreg-Bandes, wobei ein Prepreg (10), das mit einem Trägerband (12) verbunden ist, von seinem Trägerband durch Abziehen mithilfe einer Trennvorrichtung (23) genau vor einem Element (21) zum Aufbringen des Prepreg-Bandes (10) auf ein Aufbringwerkzeug (11) getrennt wird, **dadurch gekennzeichnet, dass** er der Trennvorrichtung nachgelagerte ausziehbare Mittel (30) zum Trennen des Prepregs (10) in Bezug auf das Trägerband (12) umfasst, die eine Trennung des Prepregs genau vor der Trennvorrichtung (23) ermöglichen, wodurch die Trennung des Prepregs früher erfolgen kann, wenn diese Mittel aktiviert sind.

2. Auflagekopf (20) nach Anspruch 1, **dadurch gekennzeichnet, dass** die ausziehbaren Mittel zum Trennen mindestens ein Trennelement (31) umfassen, das imstande ist, sich zwischen einer ersten ausgezogenen Position, in der es sich außerhalb der Bahn des Prepregs befindet, und einer zweiten, aktiven Position, in der es die Bahn des Prepregs in der Nähe der Trennvorrichtung umlenkt, hin und her zu bewegen.

3. Auflagekopf (20) nach Anspruch 2, **dadurch gekennzeichnet, dass** das Trennelement (31) in seiner zweiten, aktiven Position die Trennvorrichtung umgeht, um sich am Prepreg (10) bandaufwärts hoch zu bewegen.

4. Auflagekopf (20) nach Anspruch 3, **dadurch gekennzeichnet, dass** die ausziehbaren Mittel zum Trennen einen Träger (32) des Elementes (31) umfassen, der auf Schwenkmitteln (35) und Gleitmitteln (36) in Bezug auf den Auflagekopf befestigt ist.

5. Auflagekopf (20) nach Anspruch 4, **dadurch gekennzeichnet, dass** die ausziehbaren Mittel zum Trennen mithilfe eines Nockens (34) und eines Nockenfolgers (33) bewegungsgesteuert sind.

6. Auflagekopf (20) nach einem der Ansprüche 2 bis 5, **dadurch gekennzeichnet, dass** das Trennelement eine Trennrolle (31) ist.

7. Auflagekopf (20) nach einem der Ansprüche 2 bis 5, **dadurch gekennzeichnet, dass** das Trennelement ein Draht ist.

8. Auflagekopf (20) nach einem der Ansprüche 1 bis 7, **dadurch gekennzeichnet, dass** die Trennvorrichtung eine Abziehkante (23) ist.

9. Auflagekopf (20) nach einem der Ansprüche 1 bis 8, **dadurch gekennzeichnet, dass** das Trägerband (12) einerseits Prepreg-Zuschnitte (10a), die durch einfache Zuschnittlinien (13a) getrennt sind, und andererseits Prepreg-Zuschnitte (10b), die durch Bereiche getrennt sind, die Materialabfällen (13b) entsprechen, trägt.
